# EUROPEAN PATENT APPLICATION

(11) **EP 4 783 391 A1**
(43) Date of publication of application: **29.07.2026**
(21) Application number: 25154562.0
(22) Date of filing: 28.01.2025
(51) Int. Cl.: H02G 3/32, F16L 3/08, H02G 7/08

(54) **APPARATUS FOR INSTALLATION OF CABLES**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

An apparatus (100) for cable installation, comprising alan: engagement (120) for fixing the apparatus to a cable rod (110) so as to permit bodily movement of the apparatus along with the cable rod; conduit (130), attached to the engagement, and for enclosing a cable (105); split opening (125), formed as a part of the conduit and provided along an entire length of said conduit, wherein said split opening is suitable for slotting the cable into and out of the conduit, and is configured to prevent escape of the cable; and anchor (127) for fixing the cable to the apparatus.

## Description

### Field of Invention

The present invention relates to an apparatus for installing cables, and in particular for assisting with underground delivery and routing of telecommunications cables using a cable rod.

### Background

Telecommunication cables may be buried underground, and routed through underground utility tunnels (including, for example, ducts, conduits, pipes, and vaults), to help protect from environmental damage and vandalism, and to conceal such infrastructure from the public realm. However, installation of telecommunication cables underground can present significant challenges.

A cable rod, such as a so-called cobra rod, is a commonly used tool to aid the threading of cables through underground utility tunnels. These rods are made from durable materials such as fiberglass or composites, and are designed to navigate through utility tunnels and to flex so as to navigate bends.

Typically, a cable rod is first routed into, through and out of, a utility tunnel, and then the telecommunications cable that is to be installed is then pulled through the utility tunnel by the cable rod. That is, in effect, the cable rod is used to thread the telecommunications cable into and through the utility tunnel.

However, this process - of threading, by the cable rod, the telecommunications cable through a utility tunnel - requires the cable rod to be pulled all the way through the utility tunnel, which can be time-consuming, energy-intensive, and require multiple operators, which are all undesirable consequences from, at least, a perspective of cost-efficient installation and maintenance of fixed-access telecommunications networks.

It is an aim of the present invention to alleviate at least some of the aforementioned problems.

### Statements of Invention

According to a first aspect of the present invention, there is provided: an apparatus for cable installation, comprising a/an: engagement for fixing the apparatus to a cable rod so as to permit bodily movement of the apparatus along with the cable rod; conduit, attached to the engagement, and for enclosing a cable; split opening, formed as a part of the conduit and provided along an entire length of said conduit, wherein said split opening is suitable for slotting the cable into and out of the conduit, and is configured to prevent escape of the cable; and anchor for fixing the cable to the apparatus. As used herein, the term "escape" preferably connotes the inadvertent egress out of the conduit of the cable (e.g. during use of the apparatus when the cable rod is being used to deliver the cable, and without user intervention, such as by snagging), as opposed to the intentional removal of the cable by an operator (e.g. once the cable has been fully delivered and is to be de-coupled from the cable rod). Preferably, the apparatus comprises at least one engagement.

Preferably, the split opening is undersized relative to a gauge of the cable, thereby configuring the split opening to prevent escape of the cable. Optionally, the split opening is a longitudinal channel formed into a wall of the conduit. Optionally, the split opening is formed by a high-rigidity material, which may include plastic, metal and/or composites. Optionally, the split opening is straight, toothed, jagged, funnel-shaped, and/or curved.

Preferably, the apparatus further comprises an actuatable cover for selectively covering the split opening, thereby configuring the split opening to prevent escape of the cable. Optionally, the actuatable cover is a hinged lip or actuatable detent.

Preferably, the engagement is in the form of a clamp, anchor, hook, lashing and/or washer.

Preferably, the apparatus further comprises a: first coupling unit, wherein at least the engagement and anchor are a constituent thereof; and at least one second coupling unit, wherein at least the engagement, conduit, and split opening are a constituent of each thereof. Preferably, the first and the at least one second coupling units therefore provide a segmented series of couplings for the cable and cable rod. The first and second coupling units may be entirely separate or tethered together, for example by means of a wire, string, hinge or coupling. Optionally, the first and or second coupling/s comprises at least one engagement.

Preferably, the apparatus comprises the cable rod, and wherein the engagement is integrally formed with the cable rod and the conduit. Optionally, the cable rod is a cobra or duct rod. Optionally, the cable rod is steerable, and as such may be a robotic arm.

Preferably, the apparatus is selectively attachable to, and removable from, the cable rod by means of the engagement. Preferably, the apparatus further comprises a receiving formation dimensioned to conform with a profile of the cable rod, and located so as to receive the cable rod when said cable rod is engaged to the apparatus by the engagement. Optionally, the conduit is arranged parallel to the receiving formation.

The above summary is not intended to describe each illustrated embodiment or every implementation of the subject matter hereof. The invention includes any novel aspects described and/or illustrated herein. The invention also extends to methods and/or apparatus substantially as herein described and/or as illustrated with reference to the accompanying drawings.

It should be understood that the individual operations used in the methods of the present teachings may be performed in any order and/or simultaneously, as long as the teaching remains operable. Furthermore, it should be understood that the apparatus and methods of the present teachings can include any number, or all, of the described embodiments, as long as the teaching remains operable.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to an apparatus as described herein and/or substantially as illustrated with reference to the accompanying drawings. The present invention is now described, purely by way of example, with reference to the accompanying diagrammatic drawings, in which:
Figure 1 shows an apparatus for installation of a cable by a cable rod;
Figure 2 shows a cross section of the apparatus with the cable and cable rod *in situ;*
Figures 3a, 3b and 3c show a first portion of the apparatus in isolation;
Figures 4a, 4b and 4c show a second portion of the apparatus; and
Figure 5a, 5b, 5c and 5d shows an alternative form of the first portion of the apparatus.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by, at least, the claims.

### Specific Description

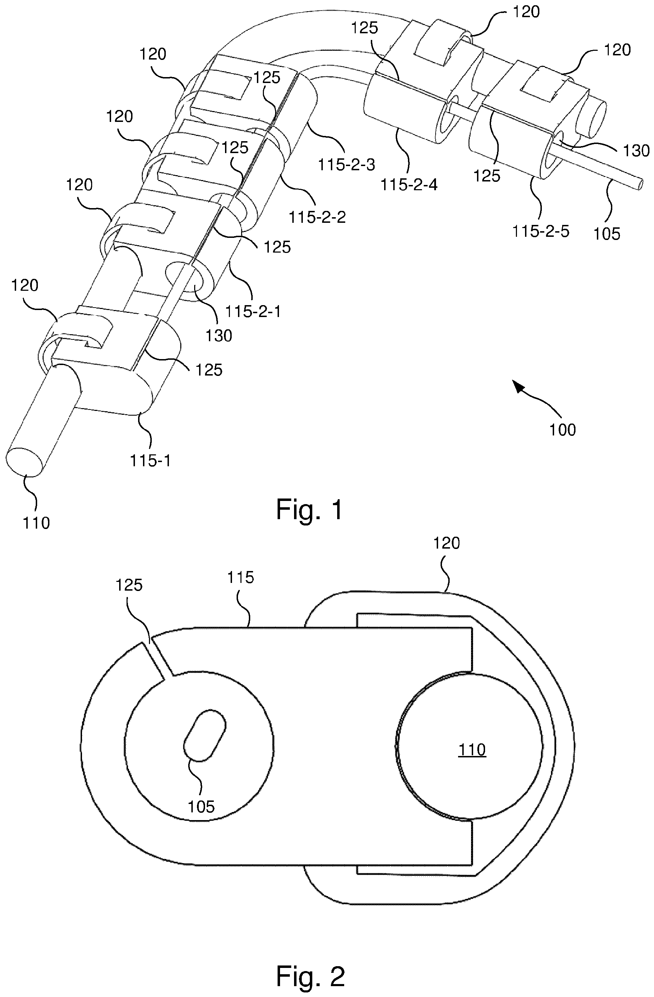

Figure 1 shows an apparatus 100 for aiding installation of a cable 105 by a cable rod 110.

The cable rod 110 (which is curtailed in Figure 1) is in the form of a cobra rod or ducting rod, as is used to guide and pull cables through a utility tunnel. Such cable rods are particularly used in telecommunications, but also for electrical power networks too. Any suitable form of cable 105 is available to be used with the apparatus, and in particular the cable is in the form of a telecommunications or signal cable (e.g. metal conductor or fibre optical cables), electrical power cables, tubing or ducting (*e.g.* for blown fibre), or a tether (*e.g.* rope or string).

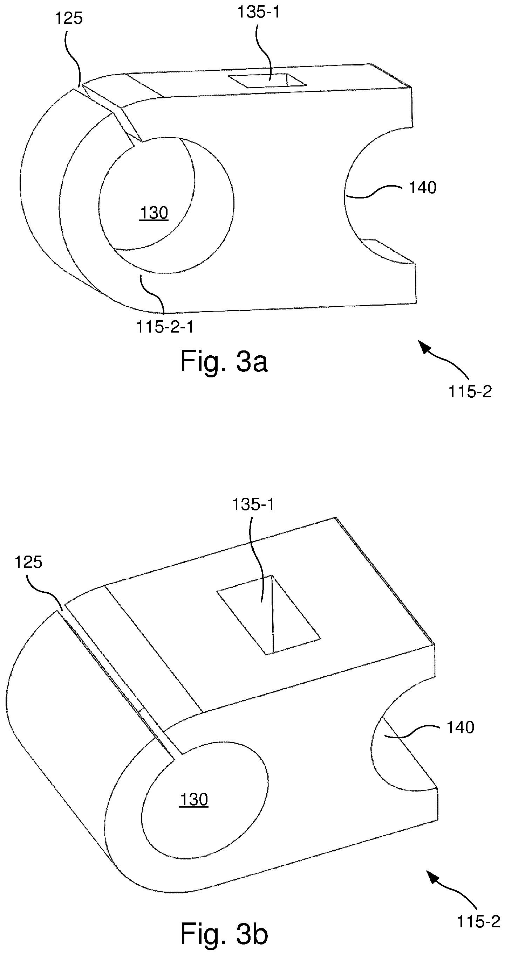

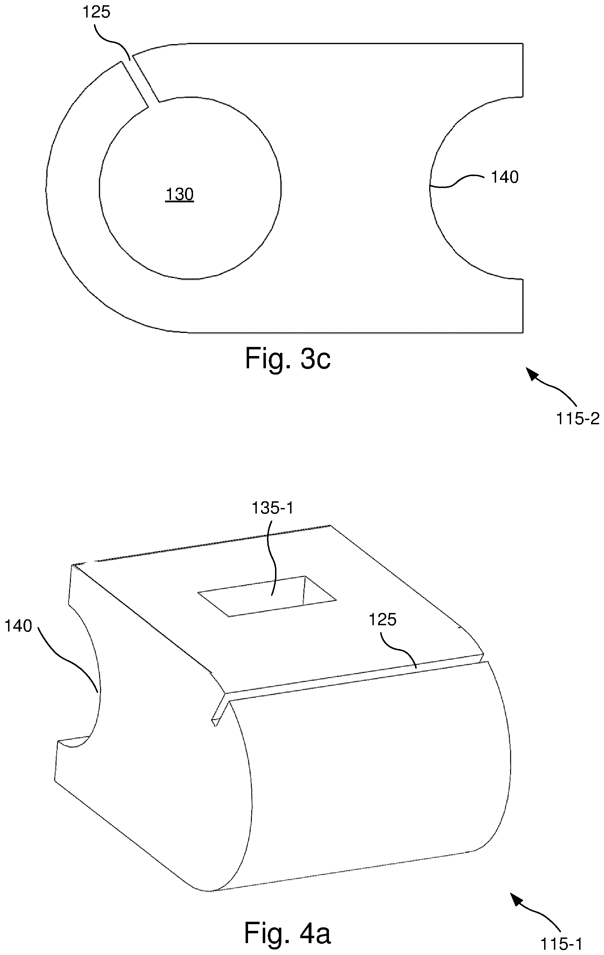

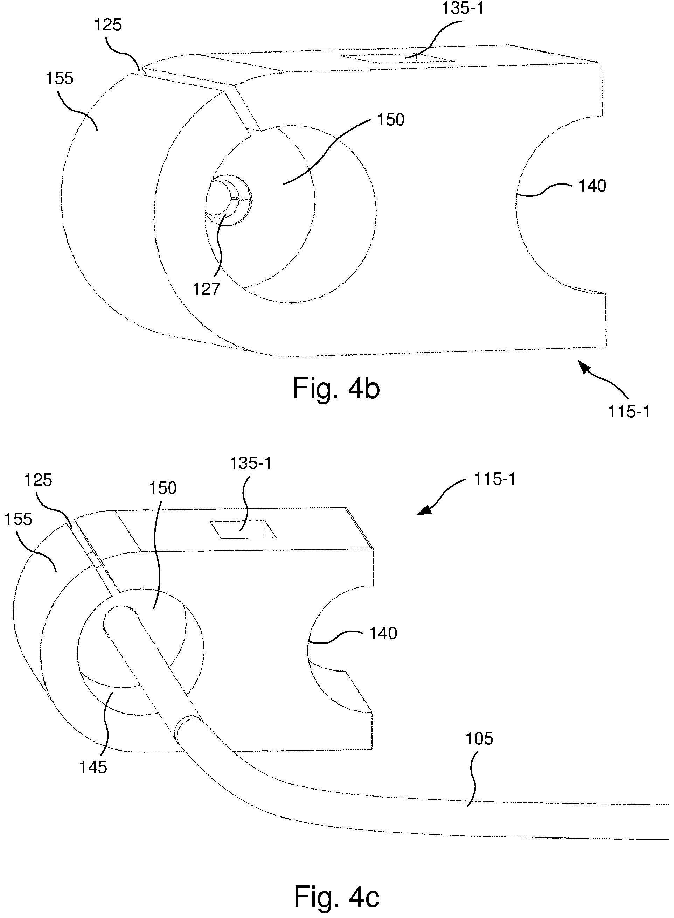

In this example, the apparatus 100 comprises a plurality of coupling units 115, including a first coupling unit 115-1 and at least two second coupling units 115-2. Figure 2 shows a lateral cross-section of one of the plurality of coupling units 115 *in situ* (*i.e.* with the cable and cable rod coupled thereto). Figures 3a, 3b and 3c show various views of a single one of the second coupling unit 115-2 in isolation, whereas Figures 4a, 4b and 4c show various views of the first coupling unit 115-1.

The first coupling unit 115-1 comprises a/an: engagement 120; split opening 125; and anchor 127. The at least one second coupling unit 115-2 comprises: the engagement 120; a conduit 130; and the split opening 125.

Each of the coupling units 115 are configured to fixedly attach to the cable rod 110, with the first coupling unit 115-1 defining a far-end - or leading - terminus of the apparatus 100 (when coupled to the cable rod 110), and each second coupling unit 115-2 is provided at intervals - trailing - thereafter, as shown in Figure 1.

The engagement 120 is provided to fix each coupling unit 115 to the cable rod 110 so that each coupling unit, and the apparatus 100 as a whole, moves bodily with the cable rod 110 as said rod is manoeuvred through a utility tunnel.

The engagement 120 comprises a strap hole 135-1 (as best shown in Figure 3a and 3b, 4a and 4c) and a corresponding cable tie, wherein the cable tie is threaded through the strap hole and tightly tied around the cable rod, thereby fastening the coupling unit 115 to the cable rod 110.

Each coupling unit 115 further comprises a receiving formation 140, which is shaped and dimensioned to conform with a profile of the cable rod 110 (*e.g*. having a semi-circular form to conform with the cylindrical shape of said rod), and which is configured to receive and hold the cable rod 110 when engaged to the apparatus 100. The receiving formation helps increase a contact surface between the respective coupling unit 115 and the cable rod when engaged together by the engagement 120.

The conduit 130 is in the form of an open-ended tube, which is dimensioned to receive and contain the cable 105. The conduit 130 is oversized relative to a gauge of the cable, so as to permit limited freedom of movement of the cable within the conduit.

For the second coupling units, the split opening 125 is formed into, and along the entire length of, the conduit 130 so as to provide an opening for - by a user - slotting, and de-slotting, the cable 105 into, and out of, the conduit (and specifically a lumen thereof). The split opening 125 is effectively a longitudinal channel across the thickness of a wall forming the conduit 130. In this way, the cable 105 is available to be inserted into the conduit, and removed therefrom, by a slotting action, which advantageously may allow the cable to be separated from the conduit 130, apparatus 100 and cable rod 110 over a shorter distance (*i.e*. manoeuvring between and outside of the conduit and an inside of the conduit over the thickness of the split opening) than by a de-threading action (*i.e*. threading the cable entirely through the conduit).

At the same time, the split opening 125 is configured to prevent escape of the cable 105 from the conduit 130. As used herein in this context, the term "escape" connotes the inadvertent egress of the cable from the conduit 130, without intentional user intervention, and in particular during delivery of the cable 105 by the cable rod (*e.g*. as a result of snagging). To help prevent such escape, in the present example, the split opening is undersized relative to the gauge of the cable 105, such that the cable is to be forcibly inserted into the conduit through the split opening (*e.g*. given compressive compliance of a sheathing of the cable, and/or elastic give in the split opening), but cannot merely slip out of the split opening 125. As such, walls of the conduit 130, which effectively define the split opening, are available formed of highly rigid materials (*e.g*. high-density plastic, metal, or composites), or are available to have limited-to-no compliance or elasticity to prevent over-expansion of the split opening, which would risk escape.

As best shown in Figures 4, the first coupling unit 115-1 comprises, in place of the conduit 130, a recess 145, which is defined by an end-cap 150 that is fixed to a surrounding tubular wall 155. For the first coupling unit 115-1, the split opening 125 is provided as part of said tubular wall 155, running along an entire length thereof. The end-cap 150 is provided in abutment with a terminal end of the split opening 125. The recess 145 contains, as part of the end-cap 150, the anchor 127. The anchor is configured to fasten an end of the cable 105 thereto, and thus to the first coupling unit 115-1. For example, the anchor is in the form of a clamp, fastener, hook, connector, lashing formation or toothed engagement. In this way, when the cable is fixed to the anchor 127, and when the first coupling is fixed to the cable rod 105, the cable is effectively pulled by the cable rod (*i.e*. by means of the first coupling unit).

Each of the at least one second coupling units 115-2 (of which five are exemplarily shown in Figures 1 and 2) are attached to the cable rod in a series after (*i.e*. away from a head of the cable rod) the first coupling unit 115-1.

In use, the coupling units 115 are engaged to the cable rod, the cable 105 is then slotted into each conduit 130 via the split opening 125 of each coupling unit 115, and the cable is fixed to the anchor 127. The cable rod is then inserted, leading with the first coupling unit 115-1, through a utility tunnel, and then manoeuvred therethrough, which may require bending of the cable rod. The cable 105 is constrained by the apparatus 100 as the cable rod flexes, thereby reducing the risk that the cable is snagged or otherwise impedes the cable rod. Once the cable rod 110 emerges from the utility tunnel, the first coupling unit 115-1 is retrieved, the cable is decoupled from the anchor 127, and the cable is de-slotted from, at least, the first (and optionally all) split opening(s), and the cable rod is retracted (or fully pulled out of) the utility tunnel.

The coupling units 115 are available to be spaced apart along the cable rod 110 by any appropriate distance, with a tighter spacing affording greater constraint of the cable 105 (and thus, for example, a lower risk of the cable catching), whereas a sparser spacing uses fewer coupling units.

### Alternatives and Modifications

In an alternative, the cable tie is integrally formed with a body of the apparatus 100, thereby obviating a need for the corresponding strap hole 135-1.

In another alternative, the apparatus is integrally formed with the cable rod, such that the engagement is a fixed bond between each coupling unit and the cable rod.

It will be appreciated by the person skilled in the art that the split opening being configured to prevent escape of the cable from the conduit is available to take several different alternatives forms, including the split opening:
- being in the form of a funnel into the conduit, or a circuitous or a labyrinthine track;
- having a re-sealable cover or seal for blocking the split opening, such as a fasten-able flap or a door; and/or
- an actuatable blockage, such as a sprung-loaded detent for blocking the split opening.

In an alternative, a cover is provided for the split opening, which may be used cover and block the split opening, and subsequently removed to permit removal of the cable from the conduit. For example, the cover is a Velcro cover that affixed to the coupling unit.

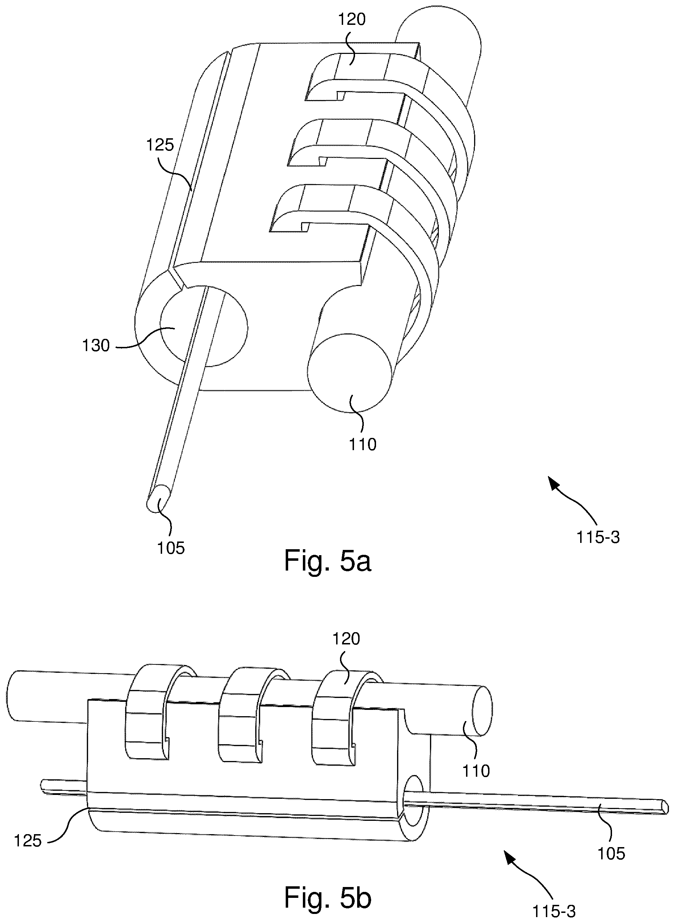

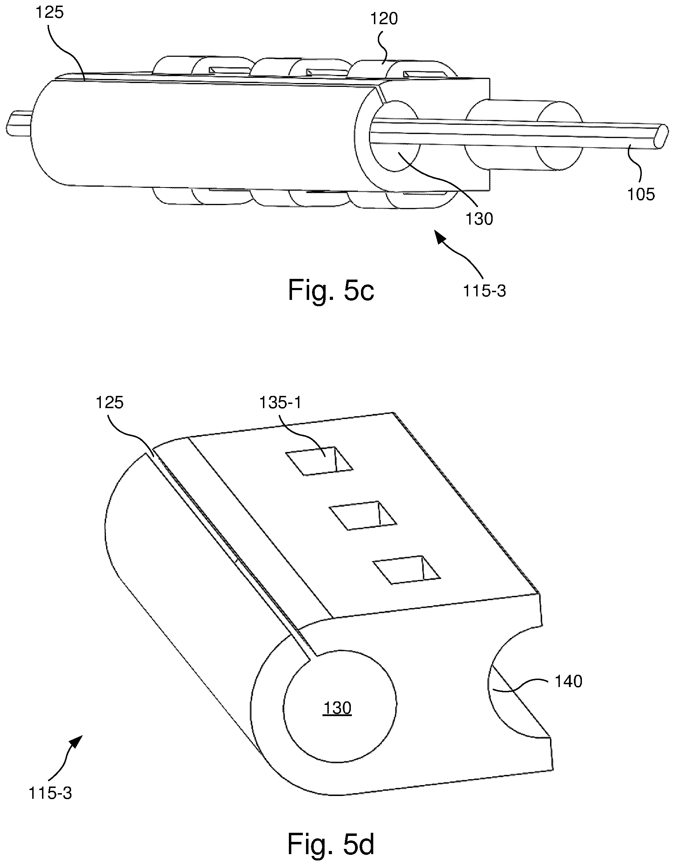

Figures 5a, 5b, 5c and 5d show an alternative form of the second coupling unit 115-3 comprising an elongate conduit 130 compared to the second coupling unit 115-2, and as such comprises a series of engagements 120.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognise that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. An apparatus for cable installation, comprising a/an:
engagement for fixing the apparatus to a cable rod so as to permit bodily movement of the apparatus along with the cable rod;
conduit, attached to the engagement, and for enclosing a cable;
split opening, formed as a part of the conduit and provided along an entire length of said conduit, wherein said split opening is suitable for slotting the cable into and out of the conduit, and is configured to prevent escape of the cable; and
anchor for fixing the cable to the apparatus.

2. An apparatus according to Claim 1, wherein the split opening is undersized relative to a gauge of the cable, thereby configuring the split opening to prevent escape of the cable.

3. An apparatus according to Claim 1 or 2, further comprising an actuatable cover for selectively covering the split opening, thereby configuring the split opening to prevent escape of the cable.

4. An apparatus according to any preceding claim, wherein the engagement is in the form of a clamp, anchor, hook, lashing and/or washer.

5. An apparatus according to any preceding claim, further comprising a:
first coupling unit, wherein at least the engagement and anchor are a constituent thereof; and
at least one second coupling unit, wherein at least the engagement, conduit, and split opening are a constituent of each thereof.

6. An apparatus according to any preceding claim, wherein the apparatus comprises the cable rod, and wherein the engagement is integrally formed with the cable rod and the conduit.

7. An apparatus according to any of Claims 1 to 6, wherein the apparatus is selectively attachable to, and removable from, the cable rod by means of the engagement.

8. An apparatus according to any preceding claim, further comprising a receiving formation dimensioned to conform with a profile of the cable rod, and located so as to receive the cable rod when said cable rod is engaged to the apparatus by the engagement.
